# FASCICULE DE BREVET EUROPEEN

(11) **EP 0 654 448 B1**
(45) Date de publication et mention de la délivrance du brevet: **20.01.1999**
(21) Numéro de dépôt: 94402144.3
(22) Date de dépôt: 27.09.1994
(51) Int. Cl.: C02F 1/04, A23K 1/02, A23K 1/14

(54) **Procédé de traitement d'une liqueur résiduaire produite dans l'industrie agroalimentaire**
Verfahren zur Aufbereitung einer, in Landwirtschaft- und Nahrungsmittelindustrie entstandenen, Abfallflüssigkeit
Process for treating waste liquid produced in agriculure and food industries

(30) Priorité: 19.11.1993 FR 9313829
(43) Date de publication de la demande: 24.05.1995
(73) Titulaire: SWENSON PROCESS S.A., F-02800 La Fère (FR)
(72) Inventeur: Colin, Benoit, F-94420 Le Plessis-Trevise (FR)
(74) Mandataire: Peuscet, Jacques

(56) Documents cités:
- FR-A- 2 596 748
- DATABASE WPI Week 9033, Derwent Publications Ltd., London, GB; AN 90-252171 & SU-A-1 517 905 (GAIDUK V. V.) 30 Octobre 1989
- PATENT ABSTRACTS OF JAPAN vol. 12, no. 358 (C-531) 26 Septembre 1988 & JP-A-63 114 987 (NIPPON PAINT CO. LTD.) 19 Mai 1988

## Description

L'invention a trait à un procédé de traitement d'une liqueur résiduaire produite dans les industries agroalimentaires, et notamment dans l'industrie sucrière, cette liqueur étant constituée par un flux aqueux contenant des matières organiques hydrosolubles et des sels minéraux. Le traitement de ces résidus a pour but de les séparer en deux fractions, l'une contenant les sels minéraux étant utilisable comme engrais et l'autre contenant les matières organiques étant utilisable dans l'alimentation animale.

On sait que l'industrie sucrière produit des flux liquides résiduaires contenant des matières organiques hydrosolubles, notamment des acides aminés et des levures, ainsi que des sels minéraux, notamment des sulfates alcalins. Ces flux résiduaires sont obtenus, par exemple, dans les opérations de fermentation des mélasses ou des jus, dits "égouts" obtenus aux différents stades de la fabrication du sucre ; ces flux résiduaires peuvent provenir également des opérations effectuées sur les éluats de régénération de résines de traitement de solutions de saccharose ; de façon générale, les flux résiduaires concernés peuvent provenir de fermentations destinées à l'obtention d'éthanol, d'acide citrique, d'acide glutamique ou autres ou de traitement de jus en vue de l'obtention de levures. Ces flux résiduaires contiennent, de façon connue, environ 3 à 15 % en poids de matières organiques hydrosolubles et environ 0,5 à 10 % en poids de sulfates alcalins, essentiellement de sulfates de sodium, de potassium et d'ammonium, le sulfate de potassium étant prépondérant.

Pour valoriser cette liqueur résiduaire, il est connu de la séparer en deux fractions : une fraction solide constituée par les sulfates et éventuellement d'autres sels minéraux, les sulfates étant en majeure partie du sulfate de potassium, fraction solide qui peut être utilisée comme engrais, et un concentré de matières organiques, (sous forme de solution concentrée plus ou moins visqueuse contenant en majorité des matières organiques et une petite quantité de matières minérales telles que Fe, Mg, Ca et des phosphates), qui peut être utilisé dans l'alimentation animale. Il est très important que le concentré de matières organiques ait une teneur en potassium très réduite : en effet, il est bien connu que le potassium risque de provoquer chez le bétail des diarrhées et un amaigrissement.

Dans FR-A-2 596 748, on a décrit un procédé de traitement de liqueur résiduaire, qui permet d'obtenir une bonne séparation des sels minéraux et des matières organiques, et, en particulier, d'obtenir un concentré de matières organiques ayant une teneur en potassium suffisamment faible pour être tolérée par les animaux. Selon ce procédé, on utilise une installation comportant au moins deux étages de concentration en série et deux séparateurs, le premier séparateur qui fournit le concentré de substances organiques étant alimenté par le dernier étage de concentration et le second séparateur pouvant être alimenté par tout étage de concentration à l'exception du dernier et fournissant les sels minéraux ; une fraction du flux liquide contenant les cristaux de sels minéraux, qui peuvent se former en aval de l'étage de concentration alimentant le second séparateur, peut être recyclée en amont de l'étage de concentration alimentant ledit second séparateur, de façon à contrôler la densité des cristaux dans ledit étage de concentration. Un tel recyclage peut être effectué directement dans l'évaporateur alimentant le second séparateur ou dans au moins un des évaporateurs d'une série, dont le dernier alimente le second séparateur ; lorsque l'évaporateur comporte une boucle de recyclage externe munie d'un échangeur de chaleur et assurant une circulation continue de la liqueur dans l'évaporateur, le recyclage peut aussi être effectué en un point de la boucle de recyclage externe situé, de préférence, en amont de l'échangeur de chaleur de façon à réchauffer également la liqueur recyclée avant son introduction dans l'évaporateur.

Le procédé selon FR-A-2 596 748 fonctionne de façon satisfaisante lorsque la liqueur résiduaire contient des ions sulfate en quantité suffisante pour précipiter la totalité du potassium sous forme de sulfate SO₄K₂. Si ce n'est pas le cas, une fraction du potassium ne peut pas être précipitée et le potassium non précipité se retrouve dans le concentré de matières organiques ; la teneur en potassium dudit concentré augmente et peut devenir dangereuse pour les animaux.

Pour remédier à cet inconvénient, on a déjà proposé d'ajouter de l'acide sulfurique dans la liqueur traitée. Mais l'addition d'acide sulfurique abaisse le pH de la liqueur traitée et il apparaît des risques de corrosion de l'équipement utilisé.

Pour éviter l'inconvénient dû à l'addition d'acide sulfurique tout en augmentant la quantité d'ions sulfate, on a également proposé d'ajouter à la liqueur traitée du sulfate d'ammonium. L'addition de sulfate d'ammonium a l'avantage d'introduire de l'azote dans le flux traité et, le sulfate d'ammonium étant fortement soluble dans l'eau, cet azote se retrouve en partie dans le concentré de matières organiques. On obtient ainsi un aliment du bétail supplémenté en azote qui est, par conséquent, plus équilibré. Malheureusement, la liqueur résiduaire est généralement sensiblement neutre ou légèrement acide et il y a donc dégagement d'ammoniac gazeux, quand on introduit le sulfate d'ammonium : il en résulte une perte importante d'azote ; mais surtout, il en résulte une pollution de l'environnement car l'ammoniac est un polluant et sa récupération par barbotage dans l'acide sulfurique est trop coûteuse pour pouvoir être envisagée dans un procédé de valorisation de substances résiduaires.

Selon la présente invention, on a trouvé que l'on pouvait résoudre les problèmes exposés ci-dessus en introduisant dans les liqueurs traitées selon FR-A-2 596 748, à la fois de l'acide sulfurique et une solution aqueuse de sulfate d'ammonium, leur introduction, simultanée ou séparée, étant effectuée de façon que le pH dans l'étage de concentration alimentant le second séparateur qui fournit les sels minéraux, soit compris entre 3,5 et 5,5.

La présente invention permet, par conséquent, à la fois de maîtriser la précipitation du potassium sous forme de sulfate de potassium et d'obtenir un concentré de matières organiques supplémenté en azote et pauvre en potassium.

La présente invention a donc pour objet un procédé de traitement d'une liqueur résiduaire produite dans l'industrie agroalimentaire contenant à la fois des sels minéraux, constitués en majeure partie de sulfate de potassium, et des matières organiques, de façon à obtenir d'une part, une fraction solide constituée principalement par des sels minéraux et d'autre part, un concentré de matières organiques à faible teneur en potassium, la liqueur résiduaire à traiter alimentant une installation comportant au moins deux étages de concentration en série et au moins deux séparateurs, le premier séparateur étant alimenté par le dernier étage de concentration et fournissant le concentré de matières organiques et le second séparateur étant alimenté par n'importe quel étage de concentration autre que le dernier étage et fournissant les sels minéraux, caractérisé par le fait que l'on introduit dans le flux liquide traité de l'acide sulfurique et une solution aqueuse de sulfate d'ammonium, de façon que le pH dans l'étage de concentration alimentant le second séparateur soit compris entre 3,5 et 5,5.

Dans un tel procédé de traitement, avantageusement, le premier séparateur fournit un flux de retour qui est renvoyé en un point amont de la circulation du flux traité et le second séparateur fournit une liqueur-mère que l'on renvoie dans le flux traité en amont ou en aval de l'étage de concentration alimentant le second séparateur.

Selon l'invention, l'acide sulfurique et la solution de sulfate d'ammonium peuvent être introduits en un même point de l'installation ou séparément, c'est-à-dire en des points différents ; ils peuvent aussi être introduits de façon continue ou discontinue, simultanément dans le temps ou alternativement.

L'introduction de l'acide sulfurique et/ou de la solution de sulfate d'ammonium peut, notamment, être effectuée dans la conduite d'alimentation en liqueur résiduaire de l'installation, et/ou dans l'étage de concentration alimentant le second séparateur et/ou dans un étage de concentration situé en amont de l'étage de concentration alimentant le second séparateur. L'acide sulfurique et/ou la solution de sulfate d'ammonium peuvent être introduits dans une liqueur recyclée dans l'étage de concentration alimentant le second séparateur et/ou dans un étage situé en amont. Cette liqueur recyclée peut être la liqueur-mère obtenue après séparation des sels minéraux dans le second séparateur ou la liqueur obtenue après séparation du concentré de matières organiques dans le premier séparateur.

Lorsqu'au moins le dernier étage de concentration est suivi d'un organe sélecteur, la liqueur recyclée peut être la liqueur enrichie en sels minéraux soutirée de l'organe sélecteur disposé entre le dernier étage de concentration et le premier séparateur fournissant le concentré de matières organiques.

Lorsque l'étage de concentration recevant la liqueur recyclée, où l'on introduit l'acide sulfurique et/ou la solution de sulfate d'ammonium, est constitué par un évaporateur associé à une boucle de recyclage externe, l'acide sulfurique et/ou le sulfate d'ammonium et/ou la liqueur recyclée contenant au moins un de ces composés peu(ven)t être introduit(s) dans ladite boucle de recyclage externe.

Lorsque l'évaporateur d'un étage de concentration, situé en aval de l'étage qui alimente le second séparateur, comporte une jambe d'élutriation (ou une zone de décantation), la liqueur recyclée peut être une liqueur prélevée dans la jambe d'élutriation (ou la zone de décantation).

Comme précédemment indiqué, l'acide sulfurique et le sulfate d'ammonium peuvent être introduits simultanément ou successivement. De préférence, l'acide sulfurique et le sulfate d'ammonium sont introduits successivement. Dans ce cas, pour éviter tout risque de dégagement d'ammoniac, le sulfate d'ammonium est avantageusement introduit en aval de l'acide sulfurique, de façon que la liqueur traitée soit acide au point d'introduction du sulfate d'ammonium, et ceci d'autant plus que les points d'introduction de l'acide sulfurique et de la solution de sulfate d'ammonium sont plus éloignés.

La quantité d'acide sulfurique introduite est, de préférence, déterminée en fonction du pH de la liqueur résiduaire introduite. La quantité de sulfate d'ammonium introduite est ensuite, de préférence, déterminée en fonction de la quantité totale d'ions sulfate (contenus dans la liqueur résiduaire et introduits sous forme d'acide sulfurique) traitée et de la quantité d'ions potassium présente dans la liqueur résiduaire.

Pour mieux faire comprendre l'invention, on va en décrire maintenant son application sur les trois modes de mise en oeuvre décrits dans FR-A-2 596 748 et illustrés sur le dessin annexé.

Sur ce dessin :
- la figure 1 donne la représentation schématique d'une installation comportant deux étages de concentration et deux séparateurs ;
- la figure 2 fournit une représentation plus détaillée d'une installation comportant deux étages de concentration constitués chacun d'un évaporateur muni d'une jambe d'élutriation, un organe sélecteur étant associé au premier et au second étage de concentration ;
- la figure 3 représente le schéma d'une installation permettant la mise en oeuvre du procédé avec trois étages de concentration.

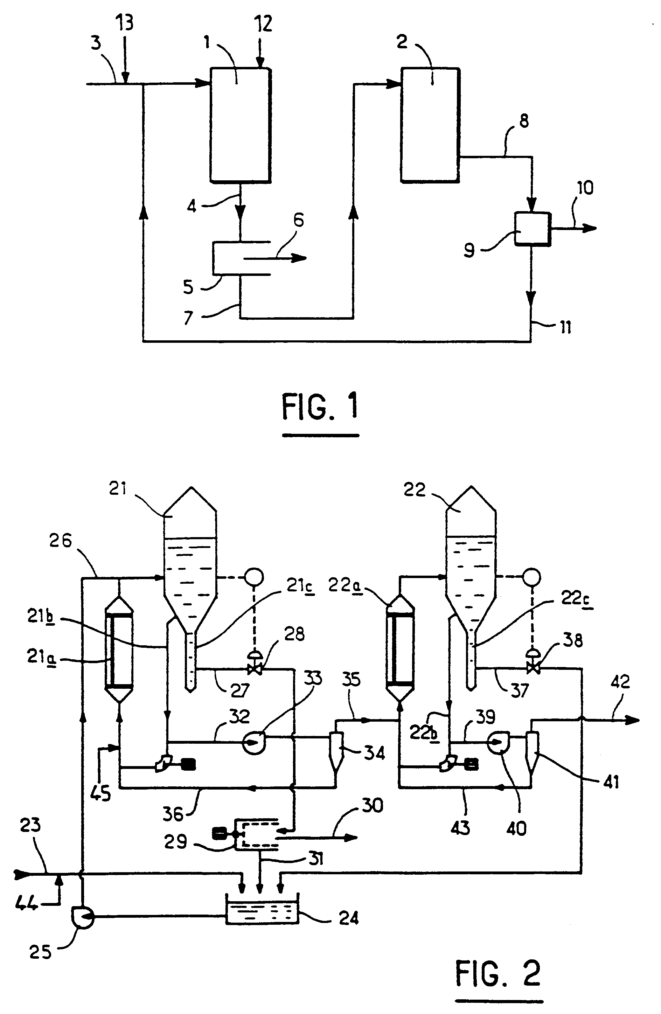

Selon le schéma illustré sur la figure 1, l'installation de traitement selon l'invention comporte deux étages de concentration 1 et 2. Le premier étage de concentration 1 est relié à une conduite de soutirage 4 qui alimente une essoreuse 5 constituant le second séparateur de l'installation. L'essoreuse 5 permet d'évacuer selon la flèche 6 des cristaux de sulfates qui sont séparés d'une liqueur-mère. Ladite liqueur-mère alimente par la canalisation 7 le deuxième étage de concentration 2. Le soutirage du deuxième étage de concentration s'effectue par la canalisation 8 en direction du premier séparateur 9 dans lequel on sépare en 10, le concentré de matières organiques, et une liqueur étant recyclée dans la canalisation d'alimentation 3 par le conduit de recyclage 11.

Selon la présente invention, on peut introduire l'acide sulfurique et/ou la solution sulfate d'ammonium séparément ou simultanément dans la canalisation d'alimentation 3, dans le conduit de recyclage 11 ou en 12, directement dans le premier étage de concentration 1.

Lorsque l'acide sulfurique et la solution de sulfate d'ammonium sont introduits séparément, l'acide sulfurique peut, par exemple, être introduit dans la canalisation d'alimentation 3 et le sulfate d'ammonium dans le conduit de recyclage 11. De préférence, on introduit l'acide sulfurique en 13 dans la canalisation d'alimentation 3 et la solution de sulfate d'ammonium en 12 dans l'étage de concentration 1.

L'installation représentée sur la figure 2 comporte également deux étages de concentration, chaque étage étant constitué par un évaporateur 21, 22, comportant une boucle externe de recyclage 21b, 22b, munie d'un échangeur thermique 21a, 22a. Les évaporateurs 21b, 22b utilisés selon le mode de réalisation représenté sur la figure sont munis à leur base d'une jambe d'élutriation 21c, 22c. La liqueur contenant des cristaux de sulfate de potassium, contenue dans l'évaporateur 21, est soutirée par la canalisation 27, ladite canalisation 27 étant, selon le mode de réalisation représenté, munie d'une vanne asservie 28 dont l'ouverture est fonction de la densité de cristaux à l'intérieur de l'évaporateur 21 ; la canalisation 27 alimente une essoreuse 29 qui constitue le second séparateur de l'installation. Dans l'essoreuse, on sépare les cristaux de sulfates, qui sont évacués selon la flèche 30, et une liqueur-mère que l'on introduit dans un bac de reprise 24. L'alimentation en liqueur résiduaire de l'installation est introduite dans le bac de reprise 24 et le contenu du bac de reprise 24 est envoyé par la canalisation 26 dans la boucle de recyclage externe 21b de l'évaporateur 21 à l'aide d'une pompe 25.

Entre le premier et le second étage est disposé un organe sélecteur, à savoir un hydrocyclone 34, qui est relié à l'évaporateur 21 par la canalisation 32 munie d'une pompe 33. La surverse de l'hydrocyclone 34, concentrée en matières organiques, est envoyée par la canalisation 35 dans le second étage de concentration 22 en un point de la boucle externe de recyclage 22b situé en amont de l'échangeur 22a. On soutire à la pointe de l'hydrocyclone 34 une liqueur concentrée en sulfates qui est recyclée par la canalisation 36 sur le premier étage de concentration en un point de la boucle externe de recyclage 21b situé en amont de l'échangeur 21a.

On soutire une liqueur du second étage de concentration en un point de la boucle externe de recyclage situé en amont de la canalisation 35 à l'aide de la canalisation 39 munie d'une pompe 40. La canalisation 39 débouche dans un hydrocyclone 41, qui constitue le premier séparateur de l'installation. L'hydrocyclone permet de séparer une fraction constituée par le concentré de matières organiques, qui est évacuée selon la flèche 42, et une liqueur susceptible de contenir des sulfates, qui est soutirée à la pointe de l'hydrocyclone et recyclée dans la boucle de recyclage externe 22b en un point intermédiaire entre la canalisation 35 et la canalisation 39. Par ailleurs, on prélève dans la jambe d'élutriation 22c une liqueur enrichie en cristaux de sulfates, qui est recyclée par l'intermédiaire de la conduite 37 munie d'une vanne asservie 38 dans le bac de reprise 24.

Selon la présente invention, on peut introduire l'acide sulfurique et/ou la solution de sulfate d'ammonium dans l'évaporateur 21, dans sa boucle de recyclage externe 21b, dans la conduite d'alimentation 23, dans le bac de reprise 24, dans la conduite 26, dans la conduite de recyclage 36 ou dans la conduite de recyclage 37 et, éventuellement, dans la conduite 31. On introduit, de préférence successivement, l'acide sulfurique dans la conduite d'alimentation 23 et la solution de sulfate d'ammonium dans la boucle de recyclage externe 21b selon les flèches 44 et 45 respectivement.

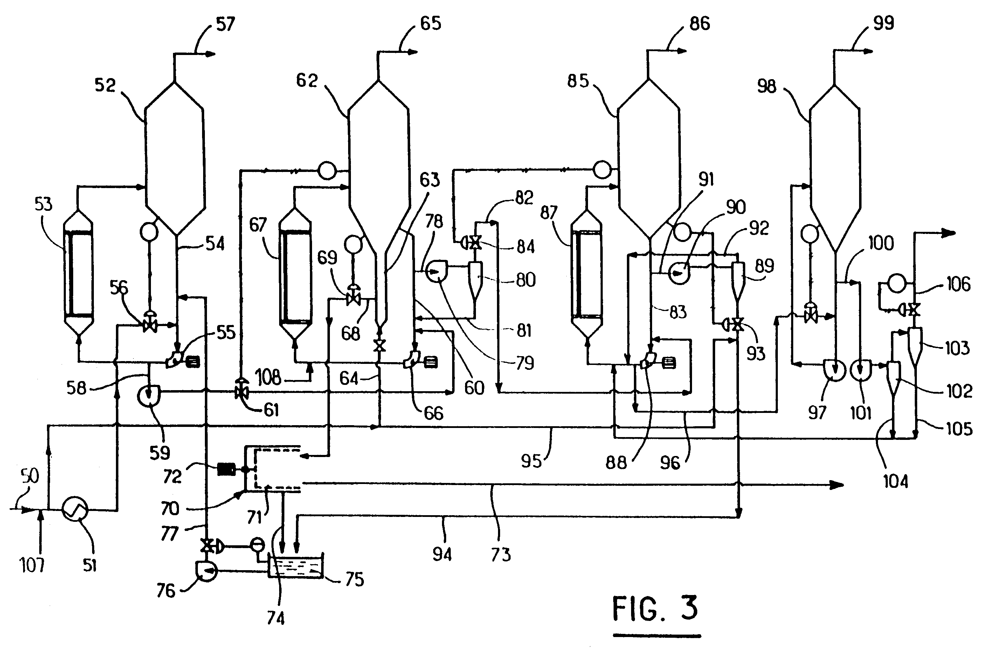

L'installation illustrée sur la figure 3 comporte trois étages de concentration suivis d'une cuve de détente.

La liqueur résiduaire à traiter est introduite dans l'installation par la canalisation 50. Elle passe dans un préchauffeur 51 d'où elle ressort à une température de 95° C. Elle est introduite dans le premier étage de concentration par la boucle de recyclage externe 54 d'un évaporateur 52. La boucle de recyclage externe 54 comporte un échangeur thermique tubulaire 53 et la circulation de la liqueur dans la boucle de recyclage externe est assurée par une pompe 55. L'entrée de la liqueur résiduaire dans le premier étage de concentration s'effectue par l'intermédiaire d'une vanne asservie 56, dont l'ouverture est fonction du niveau de liquide à l'intérieur de l'évaporateur 52. La vapeur est extraite de la cuve 52 par la canalisation 57. L'échangeur 53 fournit, à chaque passage de la liqueur, une élévation de température de 3° C. La température de la liqueur dans l'évaporateur 52 s'établit à environ 108° C.

La sortie du premier étage de concentration s'effectue par la canalisation 58 qui est prise sur la boucle de recyclage externe 54 de l'évaporateur 52 et elle est envoyée, grâce à une pompe 59, dans la boucle de recyclage externe 60 de l'évaporateur 62 du deuxième étage de concentration. Une vanne asservie 61 est disposée à la sortie de la pompe 59 et permet de réguler le niveau de liquide dans l'évaporateur 62.

L'évaporateur 62 comporte à sa partie inférieure une jambe d'élutriation 63 où les cristaux ont tendance à décanter et où ils sont maintenus en suspension par un flux pris sur l'alimentation en liqueur résiduaire et envoyé à la base de la jambe d'élutriation par la canalisation 64. La vapeur est extraite de l'évaporateur 62 par la canalisation 65 ; la température du liquide dans la cuve 62 est d'environ 112° C. La boucle de recyclage externe 60 comporte un échangeur tubulaire 67 identique à l'échangeur 53 et une pompe 66, qui assure la circulation de la liqueur dans la boucle ; l'échangeur 67 fournit une élévation de température de 3° C par passage. Le deuxième étage de concentration comporte deux sorties : la première sortie est prise sur la jambe d'élutriation 63 par une canalisation 68 ; la canalisation 68 comporte une vanne asservie 69, qui permet de régler le débit en fonction de la densité de cristaux à l'intérieur de la liqueur contenue dans l'évaporateur 62. La canalisation 68 constitue l'alimentation d'une essoreuse 70, dont le panier tournant 71 est entraîné par un moteur électrique 72 à 1 500 tours/minute. La liqueur d'alimentation de l'essoreuse 70 contient environ 50 % de solides. L'essoreuse 70 reçoit, en outre, comme alimentation, un débit d'eau de 250 kg/heure. Elle permet de séparer selon la flèche 73 des cristaux de sulfates alcalins. La liqueur-mère, qui est extraite de l'essoreuse par la canalisation 74, est envoyée dans un bac de reprise 75, où le liquide est repompé par la pompe 76 et renvoyé par la canalisation 77 dans la boucle de recyclage externe 54 du premier étage de concentration.

La deuxième sortie du deuxième étage de concentration est réalisée par la canalisation 78, qui, grâce à la pompe 79, envoie le flux de sortie sur un hydrocyclone 80 ; la liqueur recueillie à la pointe de l'hydrocyclone 80, qui contient environ 50 % de solides, est renvoyée par la canalisation 81 dans la boucle de recyclage externe 60 du deuxième étage de concentration. La surverse de l'hydrocyclone 80 est envoyée par la canalisation 82 sur la boucle de recyclage externe 83 du troisième étage de concentration ; sur la canalisation 82 est disposée une vanne 84, qui est asservie pour maintenir le niveau de liquide souhaité à l'intérieur de la cuve 85 du troisième étage de concentration.

Le troisième étage de concentration comporte une évaporateur 85 identique à l'évaporateur 52. La vapeur est extraite à sa partie supérieure par la canalisation 86. La température du liquide dans l'évaporateur 85 est d'environ 117° C. La boucle de recyclage externe 83 comporte un échangeur thermique tubulaire 87, la circulation dans ladite boucle étant assurée par la pompe 83. L'échangeur 87 est identique à l'échangeur 53 et fournit une élévation de température de 3° C par passage. A ce troisième étage de concentration, est associé un hydrocyclone 89, dont l'alimentation est assurée par la pompe 90 à partir d'une canalisation 91, qui prend sur la boucle de recyclage externe 83. La surverse de l'hydrocyclone 89 est envoyée par la canalisation 92 dans la boucle de recyclage externe 83 en aval du point où prend la canalisation 91, compte tenu du sens de circulation dans la boucle 83. La liqueur recueillie à la pointe de l'hydrocyclone, qui contient environ 50 % de solides, est envoyée, par l'intermédiaire d'une vanne asservie 93 et d'une canalisation 94, à l'intérieur du bac de reprise 75, qui alimente, comme on l'a vu, le premier étage de concentration. L'asservissement de la vanne 93 permet de maintenir dans l'évaporateur 85 la densité de solides désirable. Une certaine quantité du flux d'alimentation amené par la canalisation 50 est envoyée par la canalisation 95 dans la canalisation 94, pour assurer le transport des solides contenus dans la liqueur recueillie à la pointe de l'hydrocyclone 89.

La sortie du troisième étage de concentration s'effectue par la canalisation 96, qui prend sur la boucle de recyclage externe 83. Cette canalisation alimente, par l'intermédiaire de la pompe 97, une cuve de détente 98, qui est maintenue sous une pression réduite d'environ 10⁴ Pascals par une canalisation de pompage 99. La sortie de cette cuve de détente s'effectue par la canalisation 100, sur laquelle est disposée une pompe 101, qui envoie le flux liquide dans un premier hydrocyclone 102, dont la surverse alimente un deuxième hydrocyclone 103. Les liqueurs recueillies à la pointe des deux hydrocyclones 102 et 103 sont évacuées par les canalisations 104 et 105 respectivement et sont renvoyées dans la boucle de recyclage externe 83 du troisième étage de concentration. La surverse de l'hydrocyclone 103 est évacuée par la canalisation 106 et constitue le concentré de matières organiques que l'on évacue ; il a, après la détente dans la cuve 98, une température de 54° C.

Selon la présente invention, l'acide sulfurique et/ou la solution de sulfate d'ammonium peuvent être introduits dans la conduite d'alimentation 50, dans les évaporateurs 52 et 62 et leurs boucles de recyclage externe 54 et 60 respectivement, dans la liqueur soutirée à la pointe de l'hydrocyclone 89 et recyclée par la canalisation 94, dans le bac de reprise 75 ou dans la canalisation reliant le bac de reprise 75 et la boucle de recyclage externe 54 du premier étage de concentration.

On introduit, de préférence successivement, l'acide sulfurique dans la conduite d'alimentation 50 et la solution de sulfate d'ammonium dans la boucle de recyclage externe 60 en 107 et 108 respectivement.

### EXEMPLE

On a introduit dans l'installation illustrée sur la figure 3, par la conduite d'alimentation 50, une liqueur résiduaire, ayant une teneur en matières sèches totales de 8 % en poids, dont 1 % en poids de potassium exprimé en K par rapport au poids de la liqueur résiduaire et ayant un pH voisin de 6, à raison de 25 t/heure.

On a introduit en 107, 100 kg/heure d'acide sulfurique à 98 % en poids, et en 108, 785 t/heure d'une solution de sulfate d'ammonium à 30 % en poids de SO₄(NH₄)₂.

On obtient en 73, après essorage en 71,487 kg/heure de sulfate de potassium et, en 106, 2 101 kg/heure d'un concentré de matières organiques, qui contient 72 % en poids de matières sèches. La teneur en azote de ce concentré exprimée en N est de 2,4 % en poids et la teneur en potassium exprimée en K est de 1,5 % en poids. Le pH dans l'évaporateur 62 est de 4.

## Revendications

1. Procédé de traitement d'une liqueur résiduaire produite dans l'industrie agroalimentaire contenant à la fois des sels minéraux constitués en majeure partie par du sulfate de potassium et des matières organiques, de façon à obtenir d'une part, une fraction solide constituée principalement par des sels minéraux et d'autre part, un concentré de matières organiques à faible teneur en potassium, la liqueur résiduaire à traiter alimentant une installation comportant au moins deux étages de concentration (1, 2 ; 21, 22 ; 52, 62, 85) en série et au moins deux séparateurs, le premier séparateur (9 ; 41; 102, 103) étant alimenté par le dernier étage de concentration (2, 22, 85) et fournissant le concentré de matières organiques et le second séparateur (5, 29, 70) étant alimenté par n'importe quel étage de concentration (1, 21, 62) autre que le dernier étage et fournissant les sels minéraux, caractérisé par le fait que l'on introduit dans le flux liquide traité de l'acide sulfurique et une solution aqueuse de sulfate d'ammonium, de façon que le pH dans l'étage de concentration (1, 21, 62) alimentant le second séparateur (5, 29, 70) soit compris entre 3,5 et 5,5.

2. Procédé selon la revendication 1, caractérisé par le fait que le premier séparateur (9 ; 41 ; 102, 103) fournit un flux de retour qui est renvoyé en un point amont de la circulation du flux traité et le second séparateur (5, 29, 70) fournit une liqueur-mère que l'on renvoie dans le flux traité en amont ou en aval de l'étage de concentration (1, 21, 62) alimentant le second séparateur (5, 29, 70).

3. Procédé selon l'une des revendications 1 ou 2, caractérisé par le fait que l'acide sulfurique et le sulfate d'ammonium sont introduits en un même point ou en des points différents de l'installation, de façon continue ou discontinue, simultanément dans le temps ou alternativement.

4. Procédé selon l'une des revendications 1 à 3, caractérisé par le fait que l'on introduit l'acide sulfurique et/ou la solution de sulfate d'ammonium dans l'alimentation (3, 23, 50) en liqueur résiduaire, dans l'étage de concentration (1, 21, 62) alimentant le second séparateur (5, 29, 70) et/ou dans un étage de concentration (52) situé en amont de l'étage de concentration (62) alimentant le second séparateur (70).

5. Procédé selon l'une des revendications 1 ou 2, caractérisé par le fait que l'on introduit l'acide sulfurique et/ou la solution de sulfate d'ammonium dans une liqueur recyclée dans l'étage de concentration (1, 21, 62) alimentant le second séparateur (5, 29, 70) et/ou dans un étage de concentration (52) situé en amont.

6. Procédé selon la revendication 5, caractérisé par le fait que la liqueur recyclée est la liqueur-mère obtenue (en 31, 74) après séparation des sels minéraux dans le second séparateur (29, 70) ou la liqueur obtenue (en 11) après séparation du concentré de matières organiques dans le premier séparateur (9).

7. Procédé selon la revendication 5, dans lequel au moins le dernier étage de concentration est suivi d'un organe sélecteur, caractérisé par le fait que la liqueur recyclée est la liqueur enrichie en sels minéraux soutirée de l'organe sélecteur (89) disposé entre le dernier étage de concentration (85) et le premier séparateur (103) fournissant le concentré de matières organiques.

8. Procédé selon la revendication 5, caractérisé par le fait que l'étage de concentration recevant la liqueur recyclée, où l'on introduit l'acide sulfurique et/ou la solution de sulfate d'ammonium, est constitué par un évaporateur (21, 52, 62) associé à une boucle de recyclage externe (21b, 54, 60), l'acide sulfurique et/ou le sulfate d'ammonium et/ou la liqueur contenant au moins un de ces composés, est introduite dans la boucle de recyclage (21b, 54, 60).

9. Procédé selon la revendication 5, dans lequel un étage de concentration situé en aval de l'étage (21), qui alimente le second séparateur (29), est un évaporateur (22) comportant une jambe d'élutriation (22c), caractérisé par le fait que la liqueur recyclée est prélevée dans la jambe d'élutriation (22c).

10. Procédé selon la revendication 2, dans lequel les liqueurs recyclées sont introduites dans un bac de reprise (24, 75), caractérisé par le fait que l'acide sulfurique et/ou la solution de sulfate d'ammonium est (sont) introduit(s) dans ledit bac de reprise (24, 75).

## Claims

1. Process for treating a waste liquid produced in the agrifood industry, containing both inorganic salts, consisting mostly of potassium sulphate, and organic matter, so as to obtain, on the one hand, a solid fraction consisting mainly of inorganic salts, and, on the other hand, an organic matter concentrate with a low potassium content, the waste liquid to be treated being fed into an installation including at least two concentration stages (1, 2; 21, 22; 52, 62, 85) in series and at least two separators, the first separator (9; 41; 102, 103) being fed by the last concentration stage (2, 22, 85) and supplying the organic matter concentrate, and the second separator (5, 29, 70) being fed by any concentration stage (1, 21, 62) other than the last stage and supplying the inorganic salts, characterized in that sulphuric acid and an aqueous ammonium sulphate solution are introduced into the liquid flow treated, such that the pH in the concentration stage (1, 21, 62) fed into the second separator (5, 29, 70) is between 3.5 and 5.5.

2. Process according to Claim 1, characterized in that the first separator (9; 41; 102, 103) supplies a feedback flow which is returned at a point upstream of the circulation of the treated flow and the second separator (5, 29, 70) supplies a mother liquor which is returned into the treated flow upstream or downstream of the concentration stage (1, 21, 62) fed into the second separator (5, 29, 70).

3. Process according to either of Claims 1 and 2, characterized in that the sulphuric acid and the ammonium sulphate are introduced at the same point or at different points in the installation, in a continuous or batchwise manner, simultaneously or one after the other.

4. Process according to one of Claims 1 to 3, characterized in that the sulphuric acid and/or the ammonium sulphate solution are introduced into the feed (3, 23, 50) of waste liquid, in the concentration stage (1, 21, 62) fed into the second separator (5, 29, 70) and/or into a concentration stage (52) located upstream of the concentration stage (62) fed into the second separator (70).

5. Process according to either of Claims 1 and 2, characterized in that the sulphuric acid and/or the ammonium sulphate solution are introduced into a liquid recycled into the concentration stage (1, 21, 62) fed into the second separator (5, 29, 70) and/or into a concentration stage (52) located upstream.

6. Process according to Claim 5, characterized in that the recycled liquid is the mother liquor obtained (at 31, 74) after separation of the inorganic salts in the second separator (29, 70) or the liquid obtained (at 11) after separation of the organic matter concentrate in the first separator (9).

7. Process according to Claim 5, in which at least the last concentration stage is monitored by a selector member, characterized in that the recycled liquid is the liquid enriched with inorganic salts taken from the selector member (89) located between the last concentration stage (85) and the first separator (103) supplying the organic matter concentrate.

8. Process according to Claim 5, characterized in that the concentration stage receiving the recycled liquid, into which the sulphuric acid and/or the ammonium sulphate solution are introduced, consists of an evaporator (21, 52, 62) combined with an external recycling loop (21b, 54, 60), the sulphuric acid and/or the ammonium sulphate and/or the liquid containing at least one of these compounds being introduced into the recycling loop (21b, 54, 60).

9. Process according to Claim 5, in which a concentration stage located downstream of the stage (21), which feeds the second separator (29), is an evaporator (22) including an elutriation stem (22c), characterized in that the recycled liquid is taken from the elutriation stem (22c).

10. Process according to Claim 2, in which the recycled liquids are introduced into a recovery tank (24, 75), characterized in that the sulphuric acid and/or the ammonium sulphate solution is (are) introduced into the said recovery tank (24, 75).

## Patentansprüche

1. Verfahren zur Behandlung eines flüssigen Rückstandes, der in der Agronahrungsmittelindustrie anfällt und der gleichzeitig Mineralsalze, von denen der größere Teil Kaliumsulfat ist, und organische Materialien enthält, um einerseits eine feste, hauptsächlich aus Mineralsalzen bestehende Fraktion und andererseits ein Konzentrat organischer Materialien mit geringem Kaliumgehalt zu erhalten, wobei man den zu behandelnden flüssigen Rückstand einer Einrichtung zuführt, die wenigstens zwei Konzentrationsstufen (1, 2 ; 21, 22 ; 52, 62, 85) in Reihe und wenigstens zwei Separatoren umfaßt, wobei der erste Separator (9 ; 41 ; 102, 103) von der letzten Konzentrationsstufe (2, 22, 85) gespeist wird und das Konzentrat der organischen Materialien liefert und der zweite Separator (5, 29, 70) von einer beliebigen anderen Konzentrationsstufe (1, 21, 62) als der letzten Stufe gespeist wird und die Mineralsalze liefert, dadurch gekennzeichnet, daß man in den behandelten Flüssigkeitsstrom Schwefelsäure und eine wäßrige Ammoniumsulfatlösung derart gibt, daß der pH in der den zweiten Separator (5, 29, 70) speisenden Konzentrationsstufe (1, 21, 62) im Bereich von 3,5 bis 5,5 liegt.

2. Verfahren nach Anspruch 1, dadurch gekennzeichnet, daß der erste Separator (9 ; 41 ; 102, 103) einen Rückstrom liefert, der an einem Punkt stromaufwärts von der Zirkulation des behandelten Stroms wieder zugeführt wird und der zweite Separator (5, 29, 70) eine Mutterlauge liefert, die vor oder nach der den zweiten Separator (5, 29, 70) speisenden Konzentrationsstufe (1, 21, 62) in den behandelten Strom zurückgeführt wird.

3. Verfahren nach einem der Ansprüche 1 oder 2, dadurch gekennzeichnet, daß die Schwefelsäure und das Ammoniumsulfat am gleichen Punkt oder an verschiedenen Punkten der Einrichtung kontinuierlich oder diskontinuierlich, gleichzeitig oder wechselweise zugeführt werden.

4. Verfahren nach einem der Ansprüche 1 bis 3, dadurch gekennzeichnet, daß man die Schwefelsäure und/oder die Ammoniumsulfatlösung in die Zufuhr (3, 23, 50) an flüssigem Rückstand, in die den zweiten Separator (5, 29, 70) speisende Konzentrationsstufe (1, 21, 62) und/oder in die Konzentrationsstufe (52), die sich stromaufwärts von der den zweiten Separator (70) speisenden Konzentrationsstufe befindet, einführt.

5. Verfahren nach einem der Ansprüche 1 oder 2, dadurch gekennzeichnet, daß man die Schwefelsäure und/oder die Ammoniumsulfatlösung in eine in der den zweiten Separator (5, 29, 70) speisenden Konzentrationsstufe (1, 21, 62) recyclierte Flüssigkeit und/oder in die stromaufwärts befindliche Konzentrationsstufe (52) einführt.

6. Verfahren nach Anspruch 5, dadurch gekennzeichnet, daß die recyclierte Flüssigkeit die nach Abtrennen der Mineralsalze im zweiten Separator (29, 70) erhaltene Mutterlauge (bei 31, 74) oder die nach Abtrennung des Konzentrates der organischen Materialien im ersten Separator (9), (bei 11) erhaltene Flüssigkeit ist.

7. Verfahren nach Anspruch 5, wobei sich an wenigstens die letzte Konzentrationsstufe ein Selektororgan anschließt, dadurch gekennzeichnet, daß es sich bei der recyclierten Flüssigkeit um die an Mineralsalzen angereicherte, vom Selektororgan (89), das sich zwischen der letzten Konzentrationsstufe (85) und dem ersten das Konzentrat der organischen Materialien liefernden Separator (103) befindet, entnommene Flüssigkeit handelt.

8. Verfahren nach Anspruch 5, dadurch gekennzeichnet, daß die die die recyclierte Flüssigkeit wieder aufnehmende Konzentrationsstufe, in die man die Schwefelsäure und/oder die Ammoniumsulfatlösung einführt, von einem Verdampfer (21, 52, 62), der mit einer äußeren Recyclierungsschleife (21b, 54, 60) verbunden ist, gebildet wird, wobei die Schwefelsäure und/oder das Ammoniumsulfat und/oder die wenigstens eine dieser Verbindungen enthaltende Flüssigkeit in die Recyclierungsschleife (21b, 54, 60) eingeführt wird.

9. Verfahren nach Anspruch 5, bei dem eine Konzentrationsstufe, die sich stromabwärts von der den zweiten Separator (29) speisenden Stufe (21) befindet, ein Verdampfer (22) mit einem Abscheideteil (22c) ist, dadurch gekennzeichnet, daß die recyclierte Flüssigkeit aus dem Abscheideteil (22c) entnommen wird.

10. Verfahren nach Anspruch 2, bei dem die recyclierten Flüssigkeiten in einen Aufnahmebehälter (24, 75) geführt werden, dadurch gekennzeichnet, daß die Schwefelsäure und/oder die Ammoniumsulfatlösung in den Aufnahmebehälter (24, 75) eingeführt wird (werden).
